# EUROPEAN PATENT APPLICATION

(11) **EP 1 585 255 A1**
(43) Date of publication of application: **12.10.2005**
(21) Application number: 05300268.9
(22) Date of filing: 08.04.2005
(51) Int. Cl.: H04L 12/24

(54) **Network Management graphical user interface with customisation of object information window**

(30) Priority: 09.04.2004 US 820828
(71) Applicant: ALCATEL, 75008 Paris (FR)
(72) Inventor: KIESEKAMP, David, K2A 2B4, Ottawa (CA); MARTINEAU, Terrence, K1N 8N9, Ottawa (CA); REFAI, Khaled F., K2W 1G5, Kanata (CA); CANTON, Raymond, K1L 8L9, Ottawa (CA)
(74) Representative: Hervouet, Sylvie

(57) **Abstract**

A modified object information window includes a custom field area and an operator's note area, which enable operators to define attributes of their liking for an object. One or more custom fields may be accommodated in the custom field area, each being associated with a custom attribute field. The operator note area comprises a note text box allowing operators to leave notes pertaining to specific objects. These additional areas enable an operator to define and search on attributes relevant to that particular network. The objects associated with the object information window can be selected from the window, allowing the operator to also perform further analysis and repair objects from this window.

## Description

### Field of the invention

The invention is directed to graphical user interfaces for communication networks, and in particular to enabling custom attributes and operator notes in an object information window.

### Background of the Invention

In most cases, a communication network is not homogeneous, being made of sub-networks operated by different entities according to various protocols (SONET, Ethernet, ATM, IP, Ethernet) using equipment from a plurality of vendors. While the availability of the network elements (NE's) from multiple vendors may lead to reduction in prices, the management of networks having heterogeneous network elements from several different vendors poses important challenges to network managers. An additional challenge is posed by dynamics of the current communication networks and its geographical proliferation. Thus, new network devices are added, old devices are replaced with newer versions or removed, while some devices may be re-located. In many cases the customers wish to divide their network into different regions based on political or business boundaries; quite frequently two or more regions overlap.

Network management tools are software applications that run typically on workstations for enabling monitoring (surveillance), administration, operation, maintenance and provisioning of the network elements (NE) and connections in the respective communication network. The object of these tools is to provide a centralized view of the network for enabling correlation of the events that span NEs and sub-networks. Since the amount of information associated with even the simplest network tends to be very large, substantial effort may be required on the part of the vendors to develop software which runs on the network management system (NMS) of networks spanning over an extended geographical area.

Modern NMS's (network management systems) provide fully integrated management for various technologies such as LAN, TDM, Frame Relay, ATM and IP, with a rich graphical user interface (GUI) showing network topology and network element drawings, real-time monitoring and fault management, and provide full path management and service recovery capabilities.

A GUI uses object oriented programming techniques to present the information to the network operator for visual inspection typically using windows. A window uses very basic displayable elements and controls known as widgets, which include for example icons, pull-down menus, buttons, selection boxes, progress indicators, on-off checkmarks, scroll bars, window frames, window manipulators, and many other displayable elements.

A GUI selects the information to be presented in a window in accordance with a respective request in the context of network management and service provisioning capabilities of the network. The operators monitor and control the display of information on a video terminal (workstation) and the GUI enables the NMS to receive, reject, accept and respond to actions requested by an operator. The GUI allows an operator to retrieve information from the network using 'point-and-click' commands. As the network topology becomes more complex and more specialized, the operators need extensive training for providing on-going support. Follow-up training may need to be provided each time a new network element is added to the network.

Examples of GUI windows are the topology maps providing graphical representations of the network, where basic icons are displayed for each network object. Information about the state of the respective object is generally conveyed by outlining the icons using dashed, solid, colored, tri-dimensional representations. Less conventional states may be shown by attaching a modifier to the icon. In order to simplify the display of the overall network, the objects are grouped in various ways depending on some user-defined criteria, and higher level views (windows) use container icons.

In addition, a network management system is typically used by many operators, both simultaneously and sequentially. The operators of the same NMS may not be collocated, particularly in the case of global networks where the operators may be located on different continents. As a result, there is a need to enable operators with ways to communicate their intentions, exchange general information and warnings about certain objects, with the view to improve the management of the network.

Modern GUI's also enable the operator to display some network data for specified managed objects of the current window in response to a 'point and click' command. Such an object information window displays a set of attributes predefined (same attributes for all customers) for each type of network element. If all attributes were shown for each customer, the object information window would become too large and would be unusable for quick reference.

On the other hand, customers have different preferences for the attribute information to be displayed for the NE's in their networks. While use of a predefined set of attributes may simplify the GUI, it restricts the ability of operating a particular network according to the business operations of a respective network.

Therefore, there is a need to enable a network operator to customize the amount and type of information that can be obtained in an object information window, according to the business operations of a respective network.

Modern network management solutions should allow operators to easily monitor a network, while keeping track of significant events which may have occurred around the time a problem has precipitated in the network. This knowledge may facilitate easier problem resolution. It is known to use a network management feature whereby notes associated with an object can be stored for later searching and retrieval. However, currently these notes can only be viewed separately from the object information generated by the management system, since they are stored and accessed from a separate database.

Therefore, there is a need to enable an operator with a means to customize the object information on the GUI, by providing an object information window with a text box for maintaining operator notes on the objects in the respective window.

### Summary of the Invention

It is an object of the invention to provide a GUI with an improved object information window that facilitates problem resolution in a communication network.

It is another object of the invention to fulfill a customer requirement for the capability to provide some informational customization to the network management maps.

The invention is directed to a network management system provided with a graphical user interface (GUI) of the type adapted to transmit commands and display information with a view to enable management of a communication network. Namely, the invention provides a method of obtaining customized information regarding a managed object of the network comprising: a) selecting the managed object on a window displayed by the GUI and communicating identification data of the managed object to the network management system; b) displaying a modified object information window including fields for standard information and additional fields for the customized information pertaining to the selected object; and c) completing the fields with the standard information and the customized information, respectively.

According to another aspect of the invention, a GUI of a communication network is provided with a modified object information window that enables network operators to see an extended number of object attributes and operator information about an object of interest in one step. The modified object information window comprises a plurality of conventional object information fields pertaining to the object of interest in the network; a custom field area for enabling further characterization of the object; and a operator note area for enabling input of specific notes regarding operation of the object.

Advantageously, the invention enhances the information currently available in the object information window, by enabling use of custom attributes and operator notes. In this way, the operators may perform searches on attributes which relate to their business operations. In addition, operator notes enable operators to see all of the attributes and information about a node in one step.

Still another advantage of the invention resides in the ability to substantially reduce the errors in the network by allowing operators to communicate their intentions, observations and warnings about certain objects, as well as being able to provide reminders and deadlines for actions/operations to be performed at a certain moment. Use of the invention also increases efficiency of the network management operation, since one operator's knowledge of an object can be transferred to other operators.

And yet another advantage is that an object associated with the object information window can be selected from the window, allowing the operator to also perform further analysis and repair the objects from this window.

### Brief Description of the drawings

The foregoing and other objects, features and advantages of the invention will be apparent from the following more particular description of the preferred embodiments, as illustrated in the appended drawing, where:

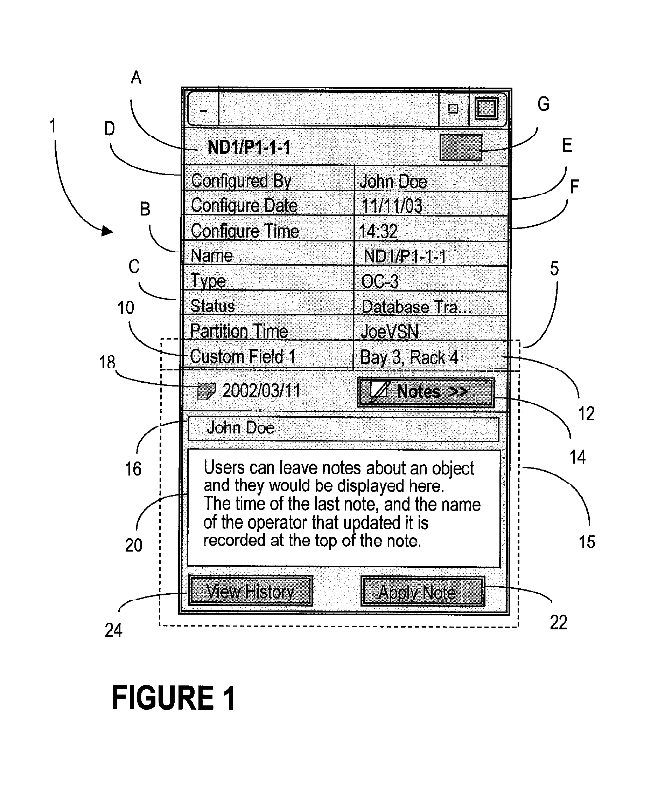

**Figure 1** shows an object information window with the integrated features according to the invention.

### Detailed Description

Figure 1 shows an example of an object information window 1 for an OC-3 port illustrating the features of the invention. An object information window typically has a field **A** for the object name (here ND1/P1-1-1), a field C for the object type (OC3), and an object status field **C**. Field **A** sits on a button that when clicked selects the object (here Port ND1/P1-1-1), allowing commands to be performed on the object, such as for example 'Configure', 'Perform Diagnostics', 'List Child objects', etc, to effect repair or gather more information related to the object. Additional information such as the name of the person that configured the respective object, shown at **D**, and fields **E** and **F** with the date and time when the object was configured are also provided in window **1**.

According to the invention, a custom field area designated by reference number **5** enables operators to define attributes of their liking for an object. This area may accommodate one or more custom fields, as shown by "Custom Field 1" designated with reference numeral **10**. Field **10** has an associated custom attribute field **12**, which is used in the example of Figure 1 for defining the location (positional information) of the respective object. However any customer-defined attribute could be displayed here. Also, the custom attributes could be different for each customer. The custom field area enables an operator to define and search on attributes relevant to that particular network.

Figure 1 also shows an operator note area **15** provided according to the invention in the object information window **1**. This area comprises a note text box **20** allowing operators to leave notes pertaining to specific pieces of equipment. For example, an operator may leave a note about an intermittent failure and the conditions at the time of the failure. The note text box is preferably collapsible, as shown by button **14** and has tracking information associated with it such as a note creator field **16** and a note creation/modification date **18**. A note update feature **22** provides the operator with the ability to store the last typed note.

Operator notes in an object info window enable the operators to see all of the attribute and operator information about a node in one step. History of notes associated with the respective object may also be launched, as shown at 24, as well as a historical catalog of the notes. An important feature of the invention is the ability to search on the notes. For example, an operator may wish to search all nodes on the NM Map for a particular type of attribute and extract the associated information.

## Claims

1. For a network management system provided with a graphical user interface (GUI) of the type adapted to transmit commands and display information with a view to enable management of a communication network, a method of obtaining customized information regarding a managed object of said network, comprising:
a) selecting said managed object on a window displayed by said GUI and communicating identification data of said managed object to the network management system;
b) displaying a modified object information window including fields for standard information and additional fields for said customized information pertaining to said managed object; and
c) completing said fields with said standard information and said customized information, respectively.

2. The method of claim 1, wherein said customized information comprises one or more attributes that define additionally said selected object.

3. The method of claim 2, further comprising the step of searching an object library for any of said additional attributes.

4. The method of claim 1, wherein said customized information is displayed in a custom field area provided on said modified object information window.

5. The method of claim 4, wherein said custom field area comprises a custom field and an associated custom attribute field, for displaying a custom attribute for said selected object.

6. The method of claim 1, wherein said customized information is displayed in an operator note area provided on said modified object information window.

7. The method of claim 6, wherein said operator note area comprises a note text box for enabling input of text notes regarding said managed object.

8. The method of claim 7, wherein said text notes include one or more custom attributes pertinent to said managed object.

9. The method of claim 6, wherein said operator note area comprises a note creator field and a date of last note field.

10. The method of claim 6, wherein said operator note area comprises an object history function for displaying historical information on all notes entered for said selected object.

11. For a GUI of a communication network, a modified object information window for enabling network operators to see an extended number of object attributes and operator information about an object of interest in one view, comprising:
a plurality of conventional object information fields pertaining to said object of interest in said network;
a custom field area for enabling further characterization of said object; and
a operator note area for enabling input of specific notes regarding operation of said object.

12. The modified object information window of claim 11, wherein said custom field area is searchable.

13. The modified object information window of claim 11, wherein said operator note area is searchable.

14. The modified object information window of claim 11, wherein said custom field area comprises a custom field and an associated object attribute field, for displaying customized information about said managed object.

15. The modified object information window of claim 14, wherein said customized information includes additional attributes pertaining to said object that are not displayed by said conventional object information fields.

16. The modified object information window of claim 11, wherein said operator note area comprises a note text box allowing operators to leave notes pertaining to said object.

17. The modified object information window of claim 16, wherein said note text box is collapsible.

18. The modified object information window of claim 16, wherein said operator note area comprises further comprises tracking information fields associated with said note text box.

19. The modified object information window of claim 16, wherein said tracking information fields comprise a note creator field and a note creation/modification date.

20. The modified object information window of claim 16, wherein said tracking information fields comprise a note update feature for enabling an operator to store the last typed note.

21. The modified object information window of claim 16, wherein said tracking information fields comprise a history of notes feature that provides historical information about operation and performance of said object.
